# EUROPÄISCHE PATENTSCHRIFT

(11) **EP 1 745 219 B1**
(45) Veröffentlichungstag und Bekanntmachung des Hinweises auf die Patenterteilung: **13.03.2013**
(21) Anmeldenummer: 05738428.1
(22) Anmeldetag: 02.04.2005
(51) Int. Cl.: F16C 11/04, F16C 27/02, B60J 7/12

(54) **BUCHSE UND GELENKIGE VERBINDUNG MIT EINER DERARTIGEN BUCHSE**
BUSH AND HINGED JOINT COMPRISING SUCH A BUSH
DOUILLE ET LIAISON ARTICULEE COMPRENANT UNE DOUILLE DE CE TYPE

(30) Priorität: 08.04.2004 DE 102004017391
(43) Veröffentlichungstag der Anmeldung: 24.01.2007
(73) Patentinhaber: Wilhelm Karmann GmbH, 49084 Osnabrück (DE)
(72) Erfinder: SELLE, Heinrich, 32549 Bad Oeynhausen (DE)
(74) Vertreter: Kronthaler, Schmidt & Coll.
(86) Internationale Anmeldenummer: PCT/DE2005/000584
(87) Internationale Veröffentlichungsnummer: WO 2005/098247

(56) Entgegenhaltungen:
- DE-A1- 10 340 279
- DE-A1- 19 731 305
- DE-B- 1 575 454
- FR-A- 2 120 604
- US-A- 4 951 349
- US-A- 5 599 056
- US-A- 5 735 631

## Beschreibung

Die Erfindung betrifft einen Verdeckmechanismus eines Cabrioletfahrzeuges nach der im Oberbegriff des Patentanspruches 1 näher definierten Art sowie eine Buchse nach der im Oberbegriff des Patentanspruches 10 näher definierten Art.

Verdeckmechanismen mit einer gelenkigen Verbindung wenigstens zweier Elemente des Verdeckmechanismus sind aus der Praxis in unterschiedlichsten Ausgestaltungen sowohl mit Buchsen aus Metall als auch aus Kunststoff bekannt. Die Buchsen werden bei gelenkigen Verbindungen zwischen zwei gegeneinander drehbaren Elementen eingesetzt, wobei in der Regel eines der Elemente auf dem hohlzylindrischen Abschnitt der Buchse gelagert ist und ein Bund der Buchse die beiden Elemente in Axialrichtung eines Gelenkzapfens voneinander trennt.

Um eine zu hohe Friktion zwischen den beiden drehbar miteinander verbundenen Elementen zu vermeiden, ist es insbesondere bei metallischen Oberflächen der zueinander bewegten Elemente erforderlich, ein Spiel zwischen diesen Elementen vorzusehen.

Bei Anwendungsgebieten, bei denen zur Vermeidung eines Klappergeräusches im Betrieb oder zur Gewährleistung eines präzisen Funktionsablaufs ein derartiges Axialspiel unerwünscht ist, wie es zum Beispiel bei einer gelenkigen Verbindung beziehungsweise bei einem Scharnier zwischen Elementen eines Verdeckmechanismus eines Cabrioletfahrzeugs der Fall ist, kann ein Schmiermittel zwischen den gegeneinander verdrehbaren Teilen eingesetzt werden, womit die gelenkige Verbindung jedoch zusätzliche Betriebsmittel und eine intensivere Wartung erfordert.

Es ist aus der Praxis ebenfalls bekannt, Buchsen aus selbstschmierendem Kunststoff, beispielsweise aus Teflon, zwischen die miteinander in Drehberührung stehenden Flächen der gelenkigen Verbindung einzusetzen, um die Reibung zwischen den Oberflächen zu vermindern und gleichzeitig den Wartungsaufwand zu reduzieren. Nachteilig ist allerdings bei derartigen Kunststoffbuchsen, dass in der Gelenkzone die Nachgiebigkeit des Gelenks stark erhöht und somit die Bewegungsgenauigkeit z. B. des Verdeckmechanismus beeinträchtigt wird.

Die DE 295 16 619 U1 offenbart ein Scharnier für die gelenkige Verbindung zweier Arme eines Faltgestänges, welches zur Erzielung einer geringen Reibung, einer Beibehaltung der Beschaffenheit im Betrieb und einer erhöhten Steifigkeit der Gelenkzone eine Buchse aufweist, die aus einem Flüssigkristall-Polymergrundmaterial besteht und zwischen einem Gelenkzapfen und auf diesen gelagerten Armen eines Faltgestänges sitzt. Jedoch gewährleistet eine derartige Buchse nur für eine begrenzte Zeit eine spielfreie Verbindung, da eine Abnützung des Flüssigkristall-Polymergrundmaterials im Betrieb auftritt.

Zum Ausgleich eines sich im Betrieb einer derartigen Buchse ergebenden Axialspiels kann zwar eine Federscheibe eingesetzt werden, womit jedoch ein zusätzliches Bauteil bei der gelenkigen Verbindung von Nöten ist.

Aus der US 5,599,056 ist eine gelenkige Verbindung zwischen zwei Komponenten eines Verdecks eines Cabrioletfahrzeugs gemäß Oberbegriff des Anspruchs 1 bekannt, bei der auf einem Gelenkzapfen zwischen den zwei zu verbindenden Komponenten Buchsen mit einem geneigten Bund zur Geräuschreduzierung angeordnet sind. Die mögliche Elastizität der Verbindung und die Dauer, über welche die Dämpfungseigenschaften in ausreichendem Maße aufrecht erhalten werden können, sind bei dieser Ausführung stark begrenzt.

Beispiele von Buchsen bei gelenkigen Verbindungen in anderen Bereichen der Technik sind aus der US 4,951,349, der US 5,735,631, der DE 197 31 305 A1, der DE 103 40 279 A1, der DE 1 575 454 B entsprechend den Oberbegriff des Anspruches 10 und der FR 2 120 604 A bekannt.

Es ist Aufgabe der vorliegenden Erfindung, einen Verdeckmechanismus eines Cabrioletfahrzeuges mit einer gelenkigen Verbindung zweier Elemente des Verdeckmechanismus sowie eine Buchse zu schaffen, bei denen ein unerwünschtes Axialspiel oder Radialspiel zu einem insbesondere axial an die Buchse grenzenden Element dauerhaft ausgeschlossen werden kann.

Erfindungsgemäß wird diese Aufgabe mit einem Verdeckmechanismus nach den Merkmalen des Patentanspruches 1 und einer Buchse nach den Merkmalen des Patentanspruches 10 gelöst.

Ein Verdeckmechanismus eines Cabrioletfahrzeugs mit einer gelenkigen Verbindung zweier Elemente des Verdeckmechanismus gemäß der Erfindung, bei der die gelenkige Verbindung mit einem Gelenkzapfen ausgebildet ist, auf dem wenigstens zwei Elemente gegeneinander drehbar bezüglich der Längsachse des Gelenkzapfens gelagert sind, wobei auf dem Gelenkzapfen wenigstens eine Buchse angeordnet ist, auf deren hohlzyldrischem Abschnitt ein erstes Element gelagert ist, und deren sich in radialer Richtung erstreckender Bund zur Unterbindung von Klappergeräuschen im Betrieb elastisch ausgestaltet und mit einem in Axialrichtung gewellten Profil ausgeformt ist, welches zum Ausgleich eines Axialspiels und/oder Radialspiels zwischen dem ersten Element und einem zweiten Element ausgelegt ist, wobei eine in einem ersten Abschnitt von einem äußeren Rand des Bundes wenigstens annähernd radial über den Bund verlaufende und sich in einem zweiten Abschnitt des Bundes wenigstens annähernd in Umfangsrichtung erstreckende Ausnehmung eine Materialfahne bildet, hat den Vorteil, dass eine je nach Auslegung des Bundes und des gewellten Profils erzielbare Federwirkung ein unerwünschtes Axialspiel und auch ein Radialspiel zu angrenzenden Bauelementen im Einbauzustand und ein damit eventuell einhergehendes Klappergeräusch im Betrieb oder eine Funktionsstörung dauerhaft unterbindet.

Eine besonders vorteilhafte Ausgestaltung zur Erzielung dieser Wirkung weist eine Buchse nach der Erfindung nach Anspruch 10 auf.

Aus Symmetriegründen ist es vorteilhaft, wenn wenigstens zwei Materialfahnen an bezüglich einer Längsachse der Buchse gegenüber liegenden Bereichen des Bundes ausgebildet sind.

Zum Axialspielausgleich und zur Aufbringung einer gewissen Federwirkung ist es vorteilhaft, wenn die Materialfahne in Axialrichtung der Buchse gebogen ist bzw. eine Ausbeulung in Axialrichtung der Buchse aufweist.

Eine solche Ausbeulung kann z. B. rillenartig in Radialrichtung des Bundes oder auch teilkugelartig an einer Materialfahne des Bundes ausgebildet sein.

In einer weiteren Ausführung kann die Ausbeulung auch rillenartig in Umfangsrichtung des Bundes an diesem ausgebildet sein. Im einfachsten Fall verläuft eine solche rillenartige Ausbeulung krempenartig in Umfangsrichtung des Bundes.

Eine gelenkige Verbindung mit einer solchen erfindungsgemäßen Buchse kann prinzipiell in allen Bereichen des Maschinenbaus und insbesondere des Kraftfahrzeugbaus Anwendung finden.

Besondere Vorteile hinsichtlich der Unterbindung von Klappergeräuschen im Fahrbetrieb und hinsichtlich der Gewährleistung des Funktionsablaufs über die Lebensdauer bietet eine erfindungsgemäße gelenkige Verbindung sowohl bei der gelenkigen Verbindung von Gelenkarmen als auch eines Hydraulikzylinders mit einem Gelenkarm oder eines karosseriefesten Hauptlagers mit einem Gelenkarm bzw. einem Hydraulikzylinder kann die robuste, wartungsarme und konstruktiv einfache gelenkige Verbindung mit einer Axialspiel ausgleichenden Buchse ihre Vorteile voll entfalten.

Weitere Vorteile und vorteilhafte Ausgestaltungen des Gegenstandes der Erfindung ergeben sich aus den Patentansprüchen, der Zeichnung und der nachfolgenden Beschreibung bevorzugter Ausführungsformen der Erfindung.

Hierbei zeigen
- Fig. 1: eine perspektivische Darstellung einer Ausführung einer erfindungsgemäßen Buchse;
- Fig. 2: eine Draufsicht auf die Buchse der Fig. 1;
- Fig. 3: eine Seitenansicht der Buchse gemäß Fig. 1 und Fig. 2;
- Fig. 5: eine vereinfachte, ausschnittsweise und perspektivische Darstellung eines Verdeckmechanismus eines Cabrioletfahrzeugs im Bereich eines Verdeckhauptlagers mit gelenkigen Verbindungen nach der Erfindung;
- Fig. 6: eine gelenkige Verbindung zwischen einem Hauptlager und einem Hydraulikzylinder des Verdeckmechanismus der Fig. 5 mit einer Buchse gemäß der Erfindung in einem vereinfachten Schnitt entlang der Linie A-A in Fig. 5;
- Fig. 7: eine gelenkige Verbindung zwischen dem Hauptlager und einem Gelenkarm des Verdeckmechanismus der Fig. 5 in einem vereinfachten Schnitt entlang der Linie B-B in Fig. 5; und
- Fig. 8: eine gelenkige Verbindung mit einer Buchse gemäß der Erfindung zwischen einem Hydraulikzylinder und einem Gelenkarm sowie zwischen Gelenkarmen eines weiteren Ausführungsbeispiels eines Verdeckmechanismus in einem vereinfachten Schnitt.

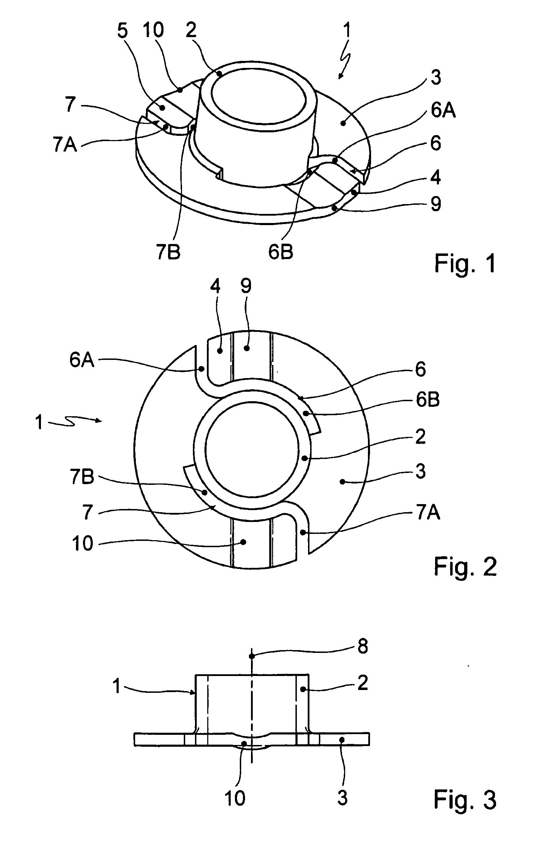

Bezug nehmend auf die Fig. 1 bis Fig. 3 ist eine Buchse 1 gezeigt, welche einen sich in Axialrichtung der Buchse 1 erstreckenden hohlzylindrischen Abschnitt 2 zur Aufnahme einer Welle oder eines Zapfens und einen sich in Radialrichtung der Buchse 1 erstreckenden, elastisch ausgestalteten Bund 3 aufweist.

Der Bund 3 ist zur Realisierung eines in Axialrichtung gewellten Profils mit vorliegend zwei Materialfahnen 4, 5 an zwei sich bezüglich einer Längsachse 8 der Buchse 1 gegenüberliegenden Bereichen ausgebildet, wobei die Materialfahnen 4, 5 jeweils durch eine Ausnehmung 6, 7 an dem Bund 3 gebildet werden.

Bei der Ausführung gemäß Fig. 1 bis Fig. 3 verlaufen diese spaltartigen Ausnehmungen 6, 7, welche in Ausführungsvarianten auch lediglich die Breite eines Schnittes haben können, zunächst in einem ersten Abschnitt 6A bzw. 7A von einem äußeren Rand des Bundes 3 wenigstens annähernd radial über den Bund 3 in Richtung des hohlzylindrischen Abschnitts 2 der Buchse 1. Anschließend verlaufen die Ausnehmungen 6, 7 in einem zweiten Abschnitt 6B bzw. 7B in Umfangsrichtung des Bundes 3, wobei der Verlauf in der Ausführung der Fig. 1 bis Fig. 3 einem Teil des Umfangs des hohlzylindrischen Abschnitts 2 der Buchse 1 folgt.

Zur Ausbildung eines gewellten Profils des Bundes 3 weisen die Materialfahne 4, 5 jeweils eine Ausbeulung 9 bzw. 10 in Axialrichtung der Buchse 1 auf, wobei die jeweilige Ausbeulung 9 bzw. 10 rillenartig in Radialrichtung des Bundes 3 ausgebildet ist.

Der Fachmann kann jedoch je nach Anwendungsfall jegliche andere Form einer Ausbeulung, wie beispielsweise eine oder mehrere teilkugelartige Ausbeulungen, zur Realisierung eines welligen Profils des Bundes wählen, wobei.die Ausbeulung vorzugsweise durch eine Ausprägung, aber auch durch eine Materialbestückung gebildet sein kann.

Wenngleich der Bund 3 bei der gezeigten Ausführung ein axiales Ende der Buchse 1 begrenzt, so ist es in anderen vorteilhaften Ausführungen auch möglich, dass der Bund in einem mittleren axialen Bereich des hohlzylindrischen Abschnitts der Buchse angeordnet ist.

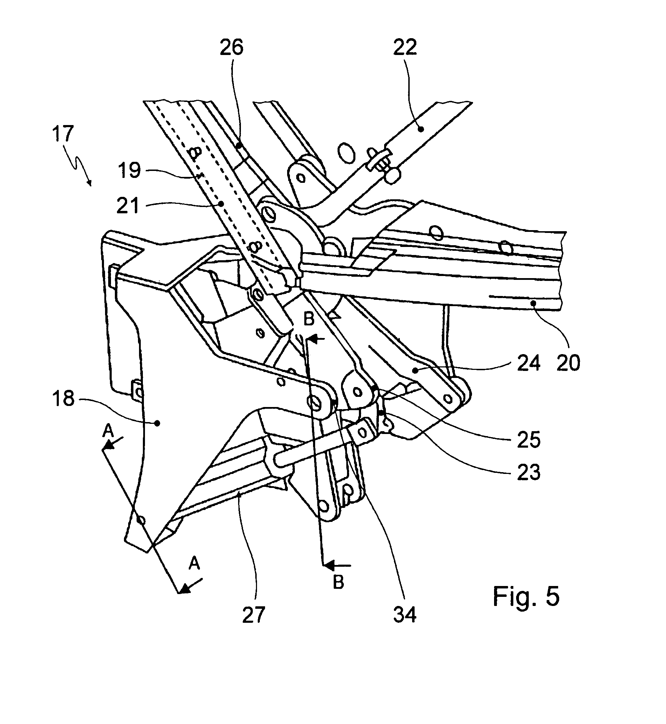

Fig. 5 bis Fig. 7 zeigt die Buchse 1 als Teil einer gelenkigen Verbindung jeweils zweier Elemente eines Verdeckmechanismus 17, welcher in an sich bekannter Weise aufgebaut ist, im Bereich eines karosseriefesten Hauptlagers 18, mit einem hieran angelenkten Verdeckgestänge 19, von dem vorliegend insbesondere ein eine Dachhaut aufnehmender heckseitiger Hauptverdeckspannspriegel 20, ein äußeres Dachrahmenprofil 21, ein Heckscheibentragebügel 22 und mit diesen Elementen zur Übertragung einer Antriebsbewegung auf weitere Elemente des Verdeckmechanismus 17 vorgesehene Gelenkarme 23, 24, 25, 26 gezeigt sind, und mit einem Hydraulikzylinder 27, welcher zum Antrieb des Verdeckgestänges 19 gelenkig sowohl mit dem Hauptlager 18 als auch mit dem Verdeckgestänge 19 verbunden ist.

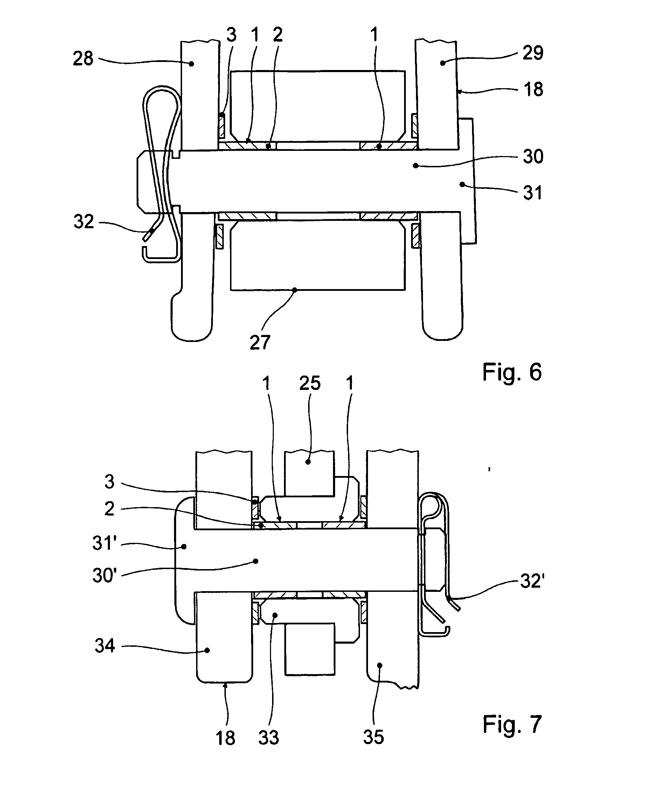

Die Fig. 6 zeigt vereinfacht die gelenkige Verbindung des Hydraulikzylinders 27 zwischen zwei Schenkeln 28, 29 des karosseriefesten Hauptlagers 18 des Verdeckmechanismus 17. Der Hydraulikzylinder 28 ist dabei auf einem Gelenkzapfen 30 gelagert, welcher axial einerseits durch einen Bund 31 und andererseits durch eine Sicherung 32 festgelegt ist. Der Hydraulikzylinder selbst, welcher in der Fig. 6 nur prinzipmäßig gezeigt ist, ist axial ohne Spiel zwischen den Schenkeln 28, 29 des Hauptlagers 18 auf zwei erfindungsgemäßen Buchsen 1 gelagert, welche jeweils mit ihrem Bund 3 an dem jeweils zugeordneten Schenkel 28 bzw. 29 anliegen und ein Axialspiel zwischen dem jeweiligen Schenkel des Hauptlagers 18 und dem Hydraulikzylinder 27 ausgleicht.

Die beiden den Zapfen 30 mit ihrem hohlzylindrischen Abschnitt 2 aufnehmenden Buchsen 1 sind hier im Einbauzustand axial vorgespannt, wobei die Vorspannung in Abhängigkeit des wellenförmigen Profils des Bundes 3 derart gewählt ist, dass der Axialspielausgleich durch die Buchsen 1 während der gesamten Lebensdauer des Verdeckmechanismus 17 gewährleistet ist.

In der Fig. 7 ist eine weitere beispielhafte Anwendung der Buchse 1 bei einer gelenkigen Verbindung des Verdeckmechanismus 17 gezeigt, wobei es sich hier um eine Verbindung zwischen dem Hauptlager 18 und dem mit dem äußeren Dachrahmenprofil 21 verbundenen Gelenkarm 25 handelt. Analog zur Anordnung gemäß Fig. 6 sind bei der gelenkigen Verbindung der Fig. 7 zwei Buchsen 1 nach Erfindung zur axialspielfreien Lagerung des Gelenkarmes 25 auf einem Gleitlager 33 zwischen zwei Schenkeln 34, 35 des Hauptlagers 18 vorgesehen. Die Buchsen 1 nehmen hierbei wiederum einen Gelenkzapfen 30' auf, welcher axial durch einen Bund 31' und eine Sicherung 32' an den Schenkeln 34, 35 des Hauptlagers 18 festgelegt ist. Über die hier ebenfalls unter Vorspannung verbauten Buchsen 1 wird eine Axialbewegung des axial jeweils an den Bund 3 der Buchse 1 grenzenden Gleitlagers 33 unterbunden.

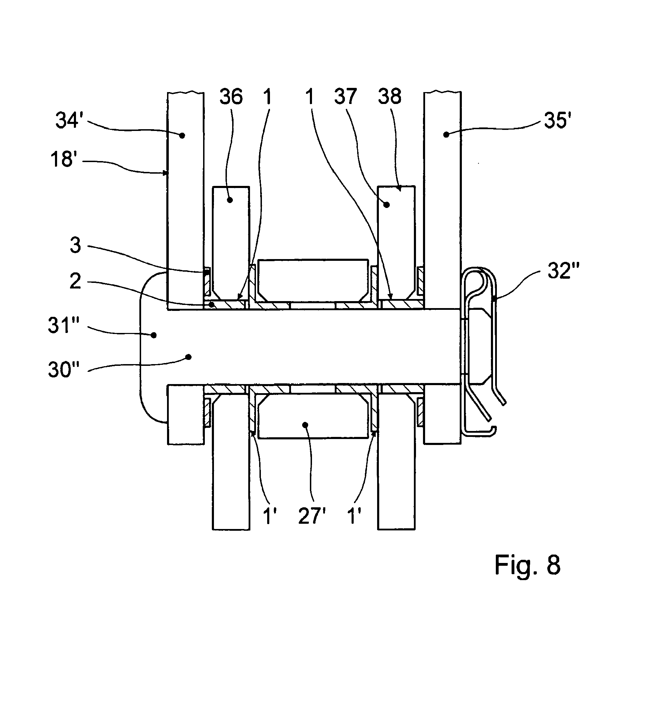

In Fig. 8 ist eine weitere gelenkige Verbindung bei einer Ausführungsvariante des Verdeckmechanismus gezeigt, wobei auf einem Gelenkzapfen 30" zwischen einem Bund 31'' und einer axialen Sicherung 32" zwei Lagerschenkel 34', 35' eines Hauptlagers 18' eines Verdecks gelagert sind, an deren axial einander zugewandten Innenseiten zwei äußere Buchsen 1 grenzen, auf denen jeweils im Einbauzustand zwei Schenkel 36, 37 eines zur Anbindung an das Verdeckgestänge vorgesehenen, gabelartigen Gelenkarms 38 angeordnet sind, wobei die Schenkel 36, 37 des Gelenkarms 38 jeweils auf dem hohlzylindrischen Abschnitt 2 der mit ihrem Innenumfang den Gelenkzapfen 30'' aufnehmenden Buchse 1 gelagert sind und durch den Bund 3 der Buchse 1 von dem jeweils benachbarten Hauptlager-Lagerschenkel 34' bzw. 35' getrennt sind.

Zwischen den Gelenkarm-Schenkeln 36, 37 sind zwei weitere, innere Buchsen 1 auf dem Gelenkzapfen 30" angeordnet, welche eine Lagerstelle eines Hydraulikzylinders 27' tragen.

Auch hier ist der Bund 3 jeweils so ausgelegt, dass ein Axialspiel zwischen einem Lagerschenkel 34' bzw. 35' des Hauptlagers 18' und einem benachbarten Schenkel 36 bzw. 37 oder zwischen diesen Schenkeln und dem Hydraulikzylinder 27' und ein eventuelles Radialspiel ausgeglichen wird.

Die gezeigten gelenkigen Verbindungen stellen lediglich beispielhafte Verbindungen eines Verdeckmechanismus dar. Der Fachmann kann jedoch bei einer entsprechenden Auslegung der erfindungsgemäßen Buchse jegliche gelenkige Verbindung eines Verdeckmechanismus erfindungsgemäß ausstatten.

## Patentansprüche

1. Verdeckmechanismus eines Cabrioletfahrzeugs mit einer gelenkigen Verbindung wenigstens zweier Elemente (18, 27; 18, 25; 27, 23) des Verdeckmechanismus (17), wobei die gelenkige Verbindung mit einem Gelenkzapfen (30, 30', 30'') ausgebildet ist, auf dem wenigstens zwei Elemente (18, 27; 18, 25; 27, 23) gegeneinander drehbar bezüglich der Längsachse des Gelenkzapfens (30, 30', 30") gelagert sind, und wobei auf dem Gelenkzapfen (30, 30', 30'') wenigstens eine Buchse (1) angeordnet ist, auf deren hohlzylindrischem Abschnitt (2) ein erstes Element (23, 27, 33) gelagert ist, und deren sich in radialer Richtung erstreckender Bund (3) zur Unterbindung von Klappergeräuschen im Betrieb elastisch ausgestaltet zum Ausgleich eines Axialspiels und/oder Radialspiels zwischen dem ersten Element (23, 27, 33) und einem zweiten Element (18, 27) ausgelegt ist,
**dadurch gekennzeichnet, daß** der Bund mit einem in Axialrichtung gewellten Profil ausgeformt ist dass eine in einem ersten Abschnitt (6A, 7A) von einem äußeren Rand des Bundes (3) wenigstens annähernd radial über den Bund (3) verlaufende und sich in einem zweiten Abschnitt (6B, 7B) des Bundes wenigstens annähernd in Umfangsrichtung erstreckende Ausnehmung (6, 7) eine Materialfahne (4, 5) bildet.

2. Verdeckmechanismus nach Anspruch 1,
**dadurch gekennzeichnet, dass** wenigstens zwei Materialfahnen (4, 5) an bezüglich einer Längsachse (8) der Buchse (1) gegenüberliegenden Bereichen des Bundes (3) ausgebildet sind.

3. Verdeckmechanismus nach einem der Ansprüche 1 oder 2,
**dadurch gekennzeichnet, dass** eine Materialfahne (4, 5) wenigstens eine Ausbeulung (9, 10, 15, 16) in Axialrichtung der Buchse (1) aufweist.

4. Verdeckmechanismus nach Anspruch 3,
**dadurch gekennzeichnet, dass** die Ausbeulung (9, 10) rillenartig in Radialrichtung des Bundes (3) ausgebildet ist.

5. Verdeckmechanismus nach Anspruch 3,
**dadurch gekennzeichnet, dass** die Ausbeulung rillenartig in Umfangsrichtung des Bundes an diesem ausgebildet ist.

6. Verdeckmechanismus nach Anspruch 3,
**dadurch gekennzeichnet, dass** die Ausbeulung teilkugelartig ausgebildet ist.

7. Verdeckmechanismus nach einem der Ansprüche 1 bis 6
**dadurch gekennzeichnet, dass** eines der Elemente ein Gelenkarm (23) ist.

8. Verdeckmechanismus nach einem der Ansprüche 1 bis 7
**dadurch gekennzeichnet, dass** eines der Elemente ein Hydraulikzylinder (27) ist.

9. Verdeckmechanismus nach einem der Ansprüche 1 bis 8
**dadurch gekennzeichnet, dass** eines der Elemente ein karosseriefestes Hauptlager (18) des Verdeckmechanismus (17) ist.

10. Buchse, insbesondere zur Anordnung an einem Verdeckmechanismus nach einem der Ansprüche 1 bis 9, mit einem sich in Axialrichtung erstreckenden hohlzylindrischen Abschnitt (2) zur Aufnahme einer Welle oder eines Zapfens (30, 30', 30'') und mit einem sich in Radialrichtung erstreckenden, elastisch ausgestalteten Bund (3), der mit einem in Axialrichtung gewellten Profil ausgeformt ist, welches zum Axialspielausgleich und/oder Radialspielausgleich ausgelegt ist,
**dadurch gekennzeichnet, dass** eine in einem ersten Abschnitt (6A, 7A) von einem äußeren Rand des Bundes (3) wenigstens annähernd radial über den Bund (3) verlaufende und sich in einem zweiten Abschnitt (6B, 7B) des Bundes wenigstens annähernd in Umfangsrichtung erstreckende Ausnehmung (6, 7) eine Materialfahne (4, 5) bildet.

## Claims

1. A hood mechanism for a convertible vehicle, comprising an articulated connection of at least two elements (18, 27; 18, 25; 27, 23) of the hood mechanism (17), said articulated connection being provided with a pivot pin (30, 30', 30") on which at least two elements (18, 27; 18, 25; 27, 23) are mounted so as to be mutually rotatable with respect to the longitudinal axis of the pivot pin (30, 30', 30"), and there being arranged on said pivot pin (30, 30', 30") at least one bushing (1), on whose hollow cylindrical section (2) a first element (23, 27, 33) is mounted and whose radially extending collar (3) is elastic so as to prevent rattling noises during operation and is designed to compensate for axial play and/or radial play between the first element (23, 27, 33) and a second element (18, 27),
**characterised in that**
said collar is formed with a profile undulating in an axial direction and **in that** a recess (6, 7), extending in a first section (6A, 7A) from an outer edge of the collar (3) at least approximately radially over the collar (3) and extending in a second section (6B, 7B) of the collar at least approximately in a circumferential direction, forms a vane of material (4, 5).

2. The hood mechanism according to claim 1, **characterised in that** at least two vanes of material (4, 5) are formed in areas of the collar (3) which are located opposite each other with respect to a longitudinal axis (8) of the bushing (1).

3. The hood mechanism according to any one of claims 1 or 2, **characterised in that** a vane of material (4, 5) has at least one bulge (9, 10, 15, 16) in an axial direction of the bushing (1).

4. The hood mechanism according to claim 3, **characterised in that** the bulge (9, 10) has a groove-like design in a radial direction of the collar (3).

5. The hood mechanism according to claim 3, **characterised in that** the bulge is provided in a groove-like manner on the collar in a circumferential direction thereof.

6. The hood mechanism according to claim 3, **characterised in that** the bulge has a partially spherical design.

7. The hood mechanism according to any one of claims 1 to 6, **characterised in that** one of the elements is an articulated arm (23).

8. The hood mechanism according to any one of claims 1 to 7, **characterised in that** one of the elements is a hydraulic cylinder (27).

9. The hood mechanism according to any one of claims 1 to 8, **characterised in that** one of the elements is a main bearing (18), fixed to the vehicle body, for the hood mechanism (17).

10. A bushing, in particular for arrangement on a hood mechanism according to any one of claims 1 to 9, with a hollow cylindrical section (2) extending in an axial direction for receiving a shaft or pin (30, 30', 30") and with an elastic collar (3) which extends in a radial direction and is formed with a profile undulating in an axial direction, said profile being designed to compensate for axial and/or radial play, **characterised in that** a recess (6, 7), extending in a first section (6A, 7A) from an outer edge of the collar (3) at least approximately radially over the collar (3) and extending in a second section (6B, 7B) of the collar at least approximately in a circumferential direction, forms a vane of material (4, 5).

## Revendications

1. Mécanisme de capote pour un véhicule cabriolet, comprenant un raccord articulé d'au moins deux éléments (18, 27; 18, 25; 27, 23) du mécanisme de capote (17), ledit raccord articulé présentant un pivot (30, 30', 30") sur lequel au moins deux éléments (18, 27; 18, 25; 27, 23) sont montés de manière rotative l'un par rapport à l'autre et par rapport à l'axe longitudinal du pivot (30, 30', 30"), sur lequel pivot (30, 30', 30") est montée au moins une douille (1), sur la partie de cylindre creux (2) de laquelle est monté un premier élément (23, 27, 33) et dont la collerette (3), s'étendant en direction radiale, est élastique afin d'éviter des bruits de ferraille en fonctionnement et est réalisée de manière à compenser un jeu axial et/ou radial entre le premier élément (23, 27, 33) et un deuxième élément (18, 27),
**caractérisé en ce que**
ladite collerette est réalisée de manière à présenter un profil ondulé en direction axiale et **en ce qu'**un évidement (6, 7), qui s'étend dans une première partie (6A, 7A) à partir d'un bord extérieur de la collerette (3) au moins approximativement en direction radiale à travers la collerette (3) et s'étend dans une deuxième partie (6B, 7B) de la collerette au moins approximativement en direction circonférentielle, constitue un drapeau de matériau (4, 5).

2. Mécanisme de capote selon la revendication 1, **caractérisé en ce qu'**au moins deux drapeaux de matériau (4, 5) sont réalisées dans des régions de la collerette (3) opposées l'une à l'autre par rapport à un axe longitudinal (8) de la douille (1).

3. Mécanisme de capote selon l'une quelconque des revendications 1 ou 2, **caractérisé en ce que** un drapeau de matériau (4, 5) présente au moins une bosse (9, 10, 15, 16) en direction axiale de la douille (1).

4. Mécanisme de capote selon la revendication 3, **caractérisé en ce que** la bosse (9, 10) est réalisée à la manière d'une rainure en direction radiale de la collerette (3).

5. Mécanisme de capote selon la revendication 3, **caractérisé en ce que** la bosse est réalisée à la manière d'une rainure sur la collerette en direction circonférentielle de celle-ci.

6. Mécanisme de capote selon la revendication 3, **caractérisé en ce que** la bosse est partiellement sphérique.

7. Mécanisme de capote selon l'une quelconque des revendications 1 à 6, **caractérisé en ce que** l'un des éléments est un bras articulé (23).

8. Mécanisme de capote selon l'une quelconque des revendications 1 à 7, **caractérisé en ce que** l'un des éléments est un vérin cylindrique (27).

9. Mécanisme de capote selon l'une quelconque des revendications 1 à 8, **caractérisé en ce que** l'un des éléments est un palier principal (18), monté fixe à la carrosserie, pour le mécanisme de capote (17).

10. Douille, destinée notamment à être disposée sur un mécanisme de capote selon l'une quelconque des revendications 1 à 9, ladite douille présentant une partie de cylindre creux (2) s'étendant en direction axiale pour le logement d'un arbre ou d'un pivot (30, 30', 30") et présentant une collerette (3) élastique, qui s'étend en direction radiale et qui présente un profil ondulé en direction axiale, ledit profil étant réalisé de manière à compenser un jeu axial et/ou radial, **caractérisé en ce qu'**un évidement (6, 7), qui s'étend dans une première partie (6A, 7A) à partir d'un bord extérieur de la collerette (3) au moins approximativement en direction radiale à travers la collerette (3) et s'étend dans une deuxième partie (6B, 7B) de la collerette au moins approximativement en direction circonférentielle, constitue un drapeau de matériau (4, 5).
